# EUROPEAN PATENT APPLICATION

(11) **EP 3 809 178 A1**
(43) Date of publication of application: **21.04.2021**
(21) Application number: 20160264.6
(22) Date of filing: 28.02.2020
(51) Int. Cl.: G02B 6/44

(54) **OPTICAL FIBRE RIBBON WITH THIN MATRIX MATERIAL LAYER**

(30) Priority: 18.10.2019 IN 201911042358
(71) Applicant: Sterlite Technologies Limited, Haryana 122002 (IN)
(72) Inventor: Kumar, Sravan, 122002 Gurgaon (IN); Kondapalli, Hemanth, 122002 Gurgaon (IN); Shukla, Vikash, 122002 Gurgaon (IN); Mishra, Atulkumar, 122002 Gurgaon (IN); Sahoo, Kishore Chandra, 122002 Gurgaon (IN)
(74) Representative: Hepworth Browne

(57) **Abstract**

The optical fibre ribbon (100) provided by the present disclosure includes a plurality of optical fibres (104) and a matrix material (106). In addition, each of the plurality of optical fibres (104) is arranged in a linear array in the optical fibre ribbon (100). Further, each of the plurality of optical fibres (104) includes a core (102) and a cladding. Furthermore, the matrix material (106) of the optical fibre ribbon (100) acts as a covering for the plurality of optical fibres (104). Furthermore, the matrix material (106) of the optical fibre ribbon (100) is characterized by thickness.

## Description

### Field of the Invention

The present disclosure relates to the field of optical fibre ribbon and, in particular, relates to an optical fibre ribbon with a thin layer of matrix material.

### Background of the invention

Over the last few years, optical fibres are widely used for communication to meet the increasing demands. Optical fibres are often bundled together to form an optical fibre ribbon. In general, optical fibre ribbon includes a number of optical fibres that have been encased in suitable matrix material. In conventional optical fibre ribbon cables, optical fibre ribbons have matrix material with large thickness. Further, this increases dimensions of the optical fibre ribbons, especially for high fibre counts. In addition, large dimensions of the optical fibre ribbon lead to increase in diameter of the optical fibre ribbon cable.

In light of the above stated discussion, there is a need for such optical fibre ribbon which can overcome the above stated disadvantages.

### SUMMARY OF THE INVENTION

The present disclosure provides a method of manufacturing an optical fibre ribbon. The method includes applying a matrix material along a longitudinal length of a plurality of optical fibres. In addition, the matrix material is applied throughout a circumference of each of the plurality of optical fibres. In addition, matrix material has thickness in range of about 5 microns to 20 microns.

A primary object of the present disclosure is to provide an optical fibre ribbon with a thin layer of matrix material.

Another object of the present disclosure is to provide the optical fibre ribbon with reduced dimensions without affecting fibre behavior.

Yet another object of the present disclosure is to provide the optical fibre ribbon cable of less weight.

Yet another object of the present disclosure is to provide the optical fibre ribbon cable of high fibre count with less outer diameter of the overall optical fibre ribbon cable.

In an embodiment of the present disclosure, each of the plurality of optical fibres has a diameter in range of 200 micron to 250 micron.

In an embodiment of the present disclosure, the optical fibre ribbon has height of about 210 micron -290 micron.

In an embodiment of the present disclosure, the plurality of optical fibres touches each other. Each of the plurality of optical fibres includes a first point of overlapping matrix material and a second point of overlapping matrix material. The first point of overlapping and the second point of overlapping matrix material makes an angle with a horizontal axis from centre of each of the plurality of optical fibres. In addition, the angle has value in range of about 15 degrees to 35 degrees. Further, value of the angle depends on thickness of the matrix material.

In an embodiment of the present disclosure, the matrix material has shape similar to shape of the plurality of optical fibres.

In an embodiment of the present disclosure, the matrix material may not occupy shape of the optical fibre ribbon.

In an embodiment of the present disclosure, the matrix material has shape similar to shape of groove.

In an embodiment of the present disclosure, the matrix material is an adhesive material.

In an embodiment of the present disclosure, the matrix material is made up of UV acrylate resin material.

In an embodiment of the present disclosure, the optical fibre ribbon has width of about 2.5 millimetre - 3.2 millimetre corresponding to 12 optical fibres. In addition, each optical fibre has diameter of about 200 micron.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates a cross sectional view of an optical fibre ribbon, in accordance with an embodiment of the present disclosure;
FIG. 2 illustrates the cross sectional view of the optical fibre ribbon, in accordance with another embodiment of the present disclosure; and
FIG. 3 illustrates a close view of two optical fibres of the optical fibre ribbon, in accordance with an embodiment of the present disclosure.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. Optical fibre ribbon.
102. Core.
104. Plurality of optical fibres.
106. Matrix material.
200. Close view.
202. The first point of overlapping.
204. The second point of overlapping.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

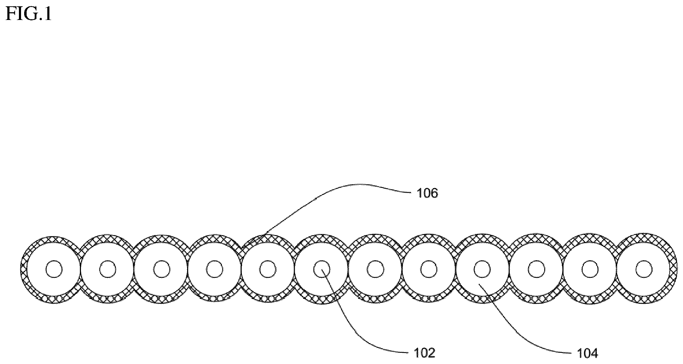

Referring to FIG. 1, this is a cross sectional view of an optical fibre ribbon 100, in accordance with an embodiment of the present disclosure. In general, optical fibre ribbons are made of number of optical fibres arranged together with a matrix material. The optical fibre ribbon 100 includes a plurality of optical fibres 104 and a matrix material 106.

The optical fibre ribbon 100 includes the plurality of optical fibres 104. In an embodiment of the present disclosure, the optical fibre ribbon 100 includes the plurality of optical fibres 104 arranged in a linear array. In general, optical fibre is used for transmitting information in the form of light pulses from one end to another. In addition, optical fibre is a thin strand of glass or plastic capable of transmitting optical signals. Further, optical fibre is configured to transmit large amount of information over long distances.

In an embodiment of the present disclosure, each of the plurality of optical fibres 104 includes a core 102. In general, core of any optical fibre is made of drawing glass (silica) or plastic. In general, core is a cylinder of glass or plastic that runs along the fibre length. In addition, core of optical fibre is made of pure glass or fibre. Further, light travels through core from one end to other according to the principle of total internal reflection. In an embodiment of the present disclosure, each of the plurality of optical fibres 104 includes a cladding. In addition, the core 102 is an inner part of each of the plurality of optical fibres 104. Further, the cladding is an outer part of each of the plurality of optical fibres 104. In general, cladding surrounds core. In an embodiment of the present disclosure, the core 102 has greater refractive index than the cladding to transmit information from one end to another end. In an embodiment of the present disclosure, each of the plurality of optical fibres 104 is a single mode optical fibre. In another embodiment of the present disclosure, each of the plurality of optical fibres 104 is multimode optical fibre.

In an embodiment of the present disclosure, the optical fibre ribbon 100 includes the matrix material 106. The matrix material 106 acts as a covering for the plurality of optical fibres 104. In general, matrix material provides a medium for binding and holding reinforcements together into a solid. In addition, matrix material offers protection to the reinforcements from environmental damage. In an embodiment of the present disclosure, the matrix material 106 provides flexibility to the optical fibre ribbon 100. In general, flexibility may be referred to ability of any material to undergo bending without any cracks or other failures when external force is applied to it. The other failures include but may not be limited to fatigue, rapture and shear.

In an embodiment of the present disclosure, the matrix material 106 is applied along a longitudinal length of the plurality of optical fibres 104. In another embodiment of the present disclosure, the matrix material 106 is applied throughout a circumference of the plurality of optical fibres 104. In yet another embodiment of the present disclosure, the plurality of optical fibres 104 are arranged in a linear pattern. In an embodiment of the present disclosure, the plurality of optical fibres 104 touches each other. In addition, the matrix material 106 is an adhesive material. In yet another embodiment of the present disclosure, the matrix material 106 has thickness less than 20 microns. In addition, the thickness of the matrix material 106 decreases dimensions of the optical fibre ribbon 100. In yet another embodiment of the present disclosure, the matrix material 106 has shape similar to shape of the plurality of optical fibres 104.

In addition, the matrix material 106 is made up of UV acrylate resin material. In an example, the matrix material 106 is made of curable ultraviolet acrylate. In general, curable ultraviolet acrylate is a material having pre-defined flexibility. In general, curable ultraviolet acrylate is soft material having high elongation along with fast cure speed. In addition, fast cure speed of curable ultraviolet acrylate leads to increase in productivity of any optical fibre ribbon.

In an embodiment of the present disclosure, the optical fibre ribbon 100 has a height of about 210 microns - 290 microns. The height of the optical fibre ribbon 100 is equal to sum of diameter of fibre in a range of 200 microns - 250 microns and 10 microns - 40 microns thickness of matrix material (5 microns to 20 microns matrix material thickness on both sides). In another embodiment of the present disclosure, the height of the optical fibre ribbon 100 may vary. In an embodiment of the present disclosure, the optical fibre ribbon 100 of 12 fibres has a width of about 2.5 millimetre - 3.2 millimetre. In another embodiment of the present disclosure, the width of the optical fibre ribbon 100 may vary.

In an embodiment of the present disclosure, the optical fibre ribbon 100 may be installed in one or more types of optical fibre cable. The one or more types of optical fibre cable include single mode optical fibre cable, multimode optical fibre cable, plastic optical fibre cable and photonic fibre cable. In an embodiment of the present disclosure, thickness of the matrix material 106 decreases dimensions of the optical fibre ribbon 100. In addition, decrease in dimensions of the optical fibre ribbon 100 reduces overall diameter of an optical fibre cable in which the optical fibre ribbon 100 is installed.

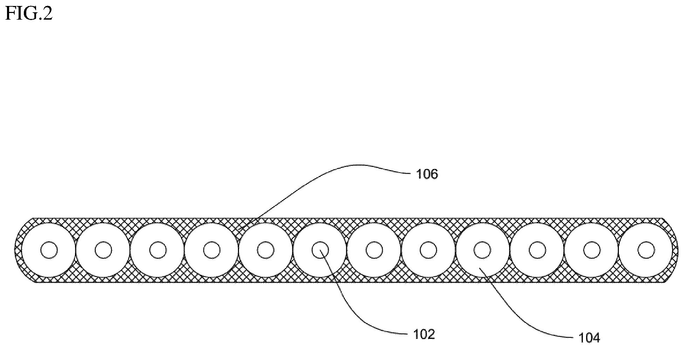

Referring to FIG. 2, this is a cross sectional view of the optical fibre ribbon 100, in accordance with another embodiment of the present disclosure. In general, optical fibre ribbons are made of number of optical fibres arranged together with a matrix material. The optical fibre ribbon 100 includes the plurality of optical fibres 104 and the matrix material 106.

The optical fibre ribbon 100 includes the plurality of optical fibres 104. In an embodiment of the present disclosure, the optical fibre ribbon 100 includes the plurality of optical fibres 104 arranged in a linear array. In general, optical fibre is used for transmitting information in the form of light pulses from one end to another. In addition, optical fibre is a thin strand of glass or plastic capable of transmitting optical signals.

Further, optical fibre is configured to transmit large amount of information over long distances.

In an embodiment of the present disclosure, the matrix material 106 may not occupy shape of the optical fibre ribbon 100 (as shown in FIG. 2). In another embodiment of the present disclosure, the matrix material 106 has the shape similar to shape of the grooved surface. In another embodiment of the present disclosure, the matrix material 106 has a flat structure.

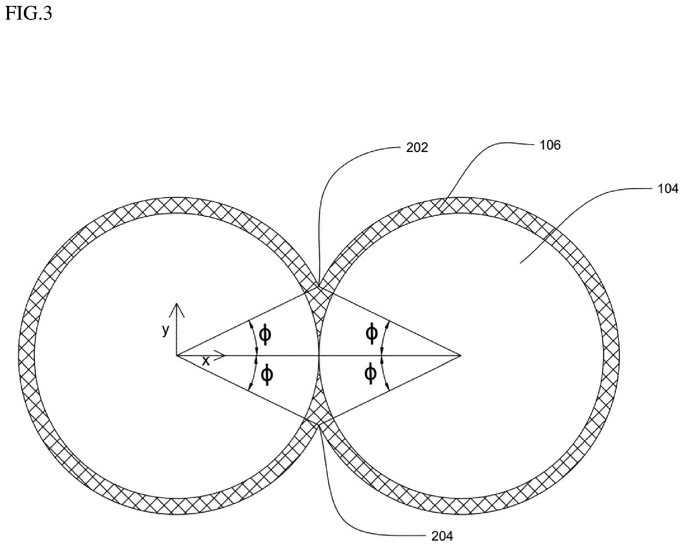

FIG. 3 illustrates a close view 200 of two optical fibres of the optical fibre ribbon 100, in accordance with an embodiment of the present disclosure. The optical fibre ribbon 100 includes the plurality of optical fibres 104. In addition, the plurality of optical fibres 104 is defined along a horizontal axis x, and a vertical axis y. Further, the plurality of optical fibres 104 is coated with the matrix material 106. In an embodiment of the present disclosure, the matrix material 106 has thickness of about 5 micron. In another embodiment of the present disclosure, the matrix material 106 has thickness of about 20 micron. In yet another embodiment of the present disclosure, the matrix material 106 has thickness in range of about 5 micron to 20 micron. In yet another embodiment of the present disclosure, thickness of the matrix material 106 may vary.

In an embodiment of the present disclosure, the plurality of optical fibres 104 has pitch of about 200 micron. In another embodiment of the present disclosure, pitch of the plurality of optical fibres 104 may vary. In an embodiment of the present disclosure, the plurality of optical fibres 104 of the optical fibre ribbon 100 touches each other. The optical fibre ribbon 100 includes a first optical fibre, a second optical fibre and a set of optical fibres. The first optical fibre and the second optical fibre are edge optical fibres of the plurality of optical fibres 104. In addition, the set of optical fibres are placed between the first optical fibre and the second optical fibre. Further, the first optical fibre and the second optical fibre has one overlapping section of matrix material 106 with corresponding adjacent optical fibre from the set of optical fibres. Furthermore, each of the set of optical fibres has two overlapping sections of matrix material 106 with corresponding two adjacent optical fibres. Moreover, thickness of matrix material 106 applied in between the overlapping sections of the plurality of optical fibres 104 is different than the given range of thickness (5 micron - 20 micron) of the matrix material 106.

The overlapping section of matrix material 106 of the plurality of optical fibres 104 include a first point of overlapping 202 and a second point of overlapping 204. The first point of overlapping 202 makes an angle ϕ with the horizontal axis x from centre of each of the plurality of optical fibres 104. Furthermore, the second point of overlapping 204 makes the angle ϕ with the horizontal axis x from centre of each of the plurality of optical fibres 104. In an embodiment of the present disclosure, the angle ϕ has value of about 15 degrees corresponding to 5 micron thickness of the matrix material 106. In another embodiment of the present disclosure, value of the angle ϕ corresponding to 5 micron thickness of the matrix material 106 may vary. In an embodiment of the present disclosure, the angle ϕ has value of about 35 degrees corresponding to 20 micron thickness of the matrix material 106. In another embodiment of the present disclosure, value of the angle ϕ corresponding to 20 micron thickness of the matrix material 106 may vary.

The optical fibre ribbon with thin matrix material layer has numerous advantages over the prior art. The matrix material of the optical fibre ribbon has less thickness as compared to the prior art. Further, thickness of the matrix material decreases the dimensions of the optical fibre ribbon. Furthermore, thickness of the optical fibre ribbon reduces consumption of the matrix material. Moreover, thickness of the matrix material of the optical fibre ribbon reduces overall weight of the optical fibre cable. Also, the optical fibre cable in which the optical fibre ribbon is installed has small overall diameter.

Although, the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. A method of manufacturing an optical fibre ribbon (100) comprising:
applying a matrix material (106) along a longitudinal length of a plurality of optical fibres (104), wherein the matrix material (106) is applied throughout circumference of each of the plurality of optical fibres (104) in a corrugated shape, wherein the matrix material (106) has thickness in range of 5 microns to 20 microns.

2. The method as claimed in claim 1, wherein each of the plurality of optical fibres (104) has a diameter in range of 200 micron to 250 micron.

3. The method as claimed in claim 1 or 2, wherein the optical fibre ribbon (100) has height of 210 microns - 290 microns.

4. The method as claimed in any preceding claim, wherein the plurality of optical fibres (104) touch each other, wherein each of the plurality of optical fibres (104) comprises a first point of overlapping (202) and a second point of overlapping (204) of matrix material (106), wherein the first point of overlapping (202) and the second point of overlapping (204) of matrix material (106) makes an angle (cp) with a horizontal axis (x) from centre of each of the plurality of optical fibres (104), wherein the angle (ϕ) has value in range of about 15 degrees to 35 degrees, wherein value of the angle (ϕ) depends on thickness of the matrix material (106), wherein the thickness of matrix material (106) applied in between the overlapping sections of the plurality of optical fibres (104) is different than the given range of thickness (5 micron - 20 micron) of the matrix material (106).

5. The method as claimed in any preceding claim, wherein the matrix material (106) has shape similar to shape of the plurality of optical fibres (104).

6. The method as claimed in any preceding claim, wherein the matrix material (106) may not occupy shape of the optical fibre ribbon (100).

7. The method as claimed in any preceding claim, wherein the matrix material (106) is an adhesive material.

8. The method as claimed in any preceding claim, wherein the matrix material (106) is made up of UV- acrylate resin material.

9. The method as claimed in any preceding claim, wherein the optical fibre ribbon (100) has width of 2.5 millimetre - 3.2 millimetre corresponding to 12 optical fibres, wherein each optical fibre has diameter of 200 micron.

10. A method of manufacturing an optical fibre ribbon (100) comprising:
applying a matrix material (106) along a longitudinal length of a plurality of optical fibres (104), wherein the matrix material (106) is applied throughout circumference of each of the plurality of optical fibres (104) in a corrugated shape, wherein the optical fibre ribbon (100) has height of 210 microns - 290 microns.

11. The optical fibre ribbon (100) as claimed in claim 10, wherein each of the plurality of optical fibres (104) has a diameter in range of 200 micron to 250 micron.

12. The optical fibre ribbon (100) as claimed in claim 10 or 11, wherein the matrix material (106) has thickness in range of 5 microns to 20 microns.

13. The optical fibre ribbon (100) as claimed in any of claims 10 to 12, wherein the matrix material (106) has shape corresponding to the plurality of optical fibres (104).

14. The optical fibre ribbon (100) as claimed in any of claims 10 to 13, wherein the matrix material (106) is made up of UV- acrylate resin material.

15. The optical fibre ribbon (100) as claimed in any of claims 10 to 14, wherein the optical fibre ribbon (100) has width of 2.5 millimetre - 3.2 millimetre corresponding to 12 optical fibres, wherein each optical fibre has diameter of 200 micron.

16. An optical fibre ribbon (100) comprising:
a plurality of optical fibres (104); and
a matrix material (106) applied on circumference of each of the plurality of optical fibres (104) forming a corrugated shape, wherein the matrix material (106) has thickness in range of 5 microns to 20 microns.

17. The optical fibre ribbon (100) as claimed in claim 16, wherein each of the plurality of optical fibres (104) has a diameter in range of 200 micron to 250 micron.

18. The optical fibre ribbon (100) as claimed in claim 16 or 17, wherein the optical fibre ribbon (100) has height of 210 microns - 290 microns.

19. The optical fibre ribbon (100) as claimed in any of claims 16 to 18, wherein the plurality of optical fibres (104) touch each other, wherein each of the plurality of optical fibres (104) comprises a first point of overlapping (202) and a second point of overlapping (204) of matrix material (106), wherein the first point of overlapping (202) and the second point of overlapping (204) of matrix material (106) makes an angle (ϕ) with a horizontal axis (x) from centre of each of the plurality of optical fibres (104), wherein the angle (ϕ) has value in range of 15 degrees to 35 degrees, wherein value of the angle (ϕ) depends on thickness of the matrix material (106), wherein the thickness of matrix material (106) applied in between the overlapping sections of the plurality of optical fibres (104) is different than the given range of thickness (5 micron - 20 micron) of the matrix material (106).

20. The optical fibre ribbon (100) as claimed in any of claims 16 to 19, wherein the optical fibre ribbon (100) has width of 2.5 millimetre - 3.2 millimetre corresponding to 12 optical fibres, wherein each optical fibre has diameter of 200 micron.
